# EUROPÄISCHE PATENTSCHRIFT

(11) **EP 3 026 020 B1**
(45) Veröffentlichungstag und Bekanntmachung des Hinweises auf die Patenterteilung: **20.09.2017**
(21) Anmeldenummer: 15003319.9
(22) Anmeldetag: 21.11.2015
(51) Int. Cl.: C02F 1/44

(54) **MISCHANLAGE FÜR GEBRAUCHSFERTIGE SPÜLLÖSUNGEN**
MIXING INSTALLATION FOR READY-TO-USE FLUSH SOLUTIONS
INSTALLATION DE MÉLANGE POUR SOLUTIONS DE RINÇAGE PRÊTES À L'EMPLOI

(30) Priorität: 25.11.2014 DE 102014017399
(43) Veröffentlichungstag der Anmeldung: 01.06.2016
(73) Patentinhaber: Fidica GmbH & Co. KG, 63877 Sailauf (DE)
(72) Erfinder: Völker, Manfred, 63825 Blankenbach (DE)
(74) Vertreter: Flosdorff, Jürgen

(56) Entgegenhaltungen:
- EP-A1- 1 834 691
- EP-A1- 2 623 188
- DE-A1- 19 754 607
- DE-U1- 9 410 530
- US-A- 5 492 537

## Beschreibung

Ziel dieser Entwicklung ist es aus Leitungswasser durch den Einsatz von Filtertechnik eine kostengünstige, chemisch und mikrobiologisch hochreine Flüssigkeit als Grundstoff für den Einsatz medizinischer Spüllösungen dezentral vor Ort herzustellen und mit einem Konzentrat so zu mischen, dass größere Volumen gebrauchsfertiger Spüllösungen entstehen, die mobil zum Anwendungsort verbracht und mittels Druckbeaufschlagung verabreicht werden können.

Dabei können sowohl Spüllösungen für endoskopische und allgemein chirurgische Operationen, z.B. Gynäkologie, Urologie, Arthroskopie durch die Verwendung von Purisole-, Ringer-, Kochsalzkonzentraten, als auch Spüllösungen zur Linderung von chronischen Krankheiten bzw. für therapeutische Anwendungen hergestellt werden.

Eine Anwendung dieser Entwicklung für andere Bereiche wie z.B. für die Veterinärmedizin, im Labor oder in der Biologie und in der Pharmazie als hochreine Spülflüssigkeit oder auch Ansatzmedium zur Herstellung von Medikamenten, Zellkulturen und dergleichen ist vorstellbar und praktikabel.

Medizinische Spüllösungen werden in der Regel aus destilliertem Wasser als Grundstoff, der zentral hergestellt wird, in einem zentralen Produktionsprozess zu Spüllösungen weiterverarbeitet und mit erheblichen Logistikkosten zum Anwendungsort gebracht.

Die regulativen und normativen Anforderungen an die Qualität des Grundstoffes Wassers sind dabei so hoch, dass es bisher nicht möglich ist, vor Ort z.B. im Krankenhaus, verifizierbare Spüllösungen auf Bedarf herzustellen.

Zum einen sind dies die hohen mikrobiologischen- und zum anderen die erforderlichen chemischen Anforderungen an den Grundstoff Wasser die einer verifizier- und nachweisbaren, normativ geforderte Qualität der vor Ort, bedarfsgesteuerten Herstellung entgegenstehen.

Es stehen zwar Laborwassergeräte auf Basis von Umkehrosmosen zur Erzeugung von Flüssigkeit mit hoher chemischer - und mikrobiologischer Reinheit zur Verfügung, aber als Nachteil ist die fehlende Prävention zur Keimreduzierung und ein nicht verifizierbarer Test der beteiligten Filterstufen zu werten.

Für den medizinischen Einsatz werden beispielsweise industriell hergestellte Spüllösungen mit Volumen 3l, 5l, 10l dem Krankenhaus zur Verfügung gestellt und mit großem innerbetrieblichem, personellem Logistikeinsatz zwischen- u. endgelagert.

Für die Dauer der Operation bzw. Untersuchung reichen diese Beutelvolumina beispielhaft für eine Blasenoperation mit ca. 60 l Spülflüssigkeit nicht aus, sodass ein Springer außerhalb des zentralen OP-Bereiches verfügbar sein muss, um die Beutel bereit zu stellen, aufzuwärmen und zuzureichen.

Die Verabreichung erfolgt teils gravimetrisch oder auch mit Beutel-Druckmanschetten. Zusätzlich sind oft teure Einmalartikel wie beispielsweise Pumpensegmente oder auch für die Beutelwärmer erforderlich.

Ein erheblicher Nachteil z.B. bei endoskopischen Untersuchungen ist die mangelnde Sicht durch flotierendes Gewebe oder pulsierende Spülflüssigkeit, weil beispielsweise der erforderliche Spülflüssigkeitsdruck zwischen 0,1 bar bis 0,3 bar nicht konstant gehalten wird.

Zur Verbesserung der Wundhygiene ist großzügig zu spülen. Dies verursacht personelle- und auch Materialkosten.

Die dezentrale Herstellung von medizinischen Spüllösungen durch Krankenhauspersonal erfordert sichere Abläufe sowohl in der Bedienung als auch in der Zuverlässigkeit der Technik hinsichtlich der Spüllösungsqualität.

Notwendige Verbesserungen, Zweck und Ziel dieser Erfindung sind deshalb die kostengünstige, anwenderfreundliche vor-Ort-Herstellung einer Spüllösung mit geringem Personaleinsatz und einem der Untersuchung bzw. auch mehreren Operationen entsprechenden Spülvolumen.

Eine besondere Bedeutung kommt der unterbrechungsfreien Verabreichung ohne zusätzlichen personellen Mehraufwand unter Einhaltung von Anwendungstemperatur und Hygiene der Lösung mit niedrigster, normativ zulässiger, mikrobiologischer und chemischer Kontamination, ohne weitere Kontrollen am Anwendungsort zu.

Dabei sollen eine raumsparende Technik zur Herstellung der Spüllösung und ein mobiler Spüllösungsbehälter zum Einsatz kommen, der die wesentlichen Komponenten für hohe Hygiene, Sicherheit, einfache Bedienung und einen konstanten Fluss und Druck zur Verabreichung der Spülflüssigkeit enthält.

Restmengen sollen einfachst zu entsorgen sein.

Eine hohe Verfügbarkeit der Geräte bei allen Mess- und Überwachungsaufgaben hinsichtlich ihrer Eigensicherheit und eine nur entfernte Ausfallwahrscheinlichkeit ist wichtig, um unter allen Umständen eine katastrophale Auswirkung für den Patienten zu vermeiden, bzw. die Qualität oder auch Toxizität der erzeugten Flüssigkeit einwandfrei in den zugesicherten Akzeptanzkriterien zu überwachen.

Auch ist die für die Rückhaltung der chemischen Bestandteile vorzugsweise als Umkehrosmose Membrane eingesetzte Filterstufe, hinsichtlich möglicher Kleinst-Rupturen nur schwer zu diagnostizieren.

Eine Leitfähigkeitsmessung als alleinige Verifizierung einer Osmose Membran -wie sie als Stand der Technik eingesetzt wird - ist nicht ausreichend.

Üblicherweise werden Keimreduktionen in wasserführenden Systemen physikalisch und oder auch chemisch durchgeführt. Großer Aufwand fällt aus Gründen der Toxizität, der Nachweiskontrolle nach einer chemischen Desinfektion zu, weil geringste Restkonzentrationen zu schwerwiegenden Patientenschäden führen können.

Außerdem werden durch den Einsatz von Chemikalien bzw. Bioziden die Abwässer kontaminiert.

Idealerweise sollte eine Kombination thermisch und chemisch gewählt werden, um sowohl eine reinigungs- als auch desinfizierende Wirkung zu erzielen.

Aufgrund der daraus resultierenden höheren Wirksamkeit wäre eine niedrigere Temperatur erforderlich und die Konzentration des chemischen Mittels könnte niedriger sein. Die Praxis zeigt aber erhebliche Schwierigkeiten hinsichtlich des transmembranen Flusses einer chemo-thermischen Reinigungslösung von der Primär- auf die Sekundär Seite der Umkehrosmose Membran auf, weil der hohe osmostische Druck dem transmembranen Druck entgegensteht.

Wegen der vorgenannten Schwierigkeiten, werden in der Praxis deshalb häufig Filter mit geringeren Standzeiten eingesetzt, die nach kurzzeitigem Gebrauch auszutauschen sind.

EP 2623188 offenbart eine Mischanlage für gebrauchsfertige Spüllösungen mit einer RO-Anlage und einer Mischeinheit, womit ein nicht näher definierter mobiler Spüllösungsbehälter gefüllt werden kann.

DE 9410530 offenbart einen mobilen Spüllösungsbehälter für chirurgische Eingriffe, wobei die Spüllösung sich in einem Beutel in einem beaufschlagten Druck-Mantelgefäß befindet. Diese Aufgabe wird erfindungsgemäß wirkungsvoll mit einer Mischanlage nach Anspruch 1 gelöst. Zur Herstellung von beispielsweise ca. 60 l gebrauchsfertiger Purisolelösung sind ca. 561 sterilfiltriertes Permeat mit ca. 3,6l hochkonzentriertem Purisolekonzentrat proportional so zu verdünnen bzw. zu mischen, dass die entstandene Spüllösung ohne weitere Prüfungen zur intra- und postoperativen Blasenspülung zur Anwendung kommen kann.

Die vorgenannte Spüllösung steht stellvertretend z.B. für Ringer -, und/oder andere Natriumchloridlösungen, die insbesondere im Bereich der Chirurgie, aber auch in andren medizinischen bzw. genannten Bereichen eingesetzt werden können. Wobei die Konzentrate und deren Mischungsverhältnisse den jeweiligen Anwendungen anzupassen sind.

Häufig als Spüllösung eingesetzt werden z.B. 0,9 % Natriumchlorid Lösungen. Zur Aufbereitung von ca 100 l dieser Lösung genügt bei einem Verhältnis von 1:35 ein Konzentratvolumen von ca. 2,9 l.
Ringerspüllösungen sind mit geringen Abweichungen vom vorgenannten herzustellen. Beispielsweise sind bei einem Mischverhältnis von 1:34,6 mit ca. 2,872 l Ringerkonzentrat 100 l Ringerlösung aufzubereiten.

Die Aufkonzentration auf das ca. 30- 35 fache, bei einer Löslichkeitstemperatur von ca. 10°C zeigt das Potential der Logistik-, Handhabungs- und Platzeinsparungen.

Das beschriebene Verfahren und die eingesetzten Komponenten und Volumen sind jedoch nicht darauf reduziert. Bedingt durch die hochreinen Wirkmittel, das exakte Mischen und Verdünnen ist eine große Bandbreite von Spüllösungen herstellbar.

Vorteilhafterweise wird durch die hohe Konzentration auch das Keimwachstum des Konzentrates nahezu verhindert.

Zur Aufbereitung der Spüllösung wird das Konzentratbehältnis das vorteilhaft als Beutel ausgeführt ist an vorbereitete Aufnahmen der Füllstationskonzentratwaage gehängt und der Mischvorgang eingeleitet. Dabei wird zunächst durch das bekannte Beutelgewicht die Waage verifiziert.

Die Füllstationsseitigen Anschlüsse des Konzentrats- als auch des noch zu beschreibenden Spüllösungsbeutels werden an selbstreinigende, verwechslungssichere Anschluss-Konnektoren der Füllstation, die in dieser Anmeldung beispielsweise als Klappenlösungen ausgeführt sind, aber auch geräteseitig als flexible Schlauchleitung ausgeführt sein können, durch den Anwender herbeigeführt. Erfindungsgemäß wird ein fahrbarer Spüllösungsbehälter, der als Druckbehälter ausgebildet ist, mit einem einlegbaren sterilen Spülflüssigkeitsbeutel bestückt, der mit einem entsprechend großen Volumen befüllt wird.

Der Spüllösungsbeutel beinhaltet einen unlösbaren Anschlusskonnektor, der durch den verriegelbaren Deckel des Druckbehälters durchgesteckt und fixiert werden kann. Der Anschlusskonnektor kann mit weiterführenden flexiblen Schlauchleitungen versehen werden, die als Füll- bzw. Transferleitungen ausgebildet sind. Wobei der Konnektor mit Vorteil auch nur einen Schlauch ausgeführt sein kann der wahlweise und in Abhängigkeit der Sterilitätsanforderungen sowohl als Füll- als auch als Transferschlauch zu verwenden ist.

Zur Verabreichung der Spülflüssigkeit am Anwendungsort kann an den Transferanschluss des Spüllösungskonnektors ein Überleitsystem beispielsweise mit einem Endoskopiesystem verbunden werden. Ein Anschluss an andre in der Chirurgie üblichen Systeme beispielweise an Spül-Saugsysteme ist ebenfalls praktikabel und möglich.

Gelöst wurde die Aufgabe der einfachen Bedienung und der Verabreichung mit konstantem Spülfluss und -Druck, indem Druckgas (Luft) entweder vorzugsweise in den Druckbehälter oder auch wahlweise direkt in den Spülflüssigkeitsbeutel eingeleitet wird.

Dabei wird mit Vorteil die Druckgasregelung und Überwachung innerhalb des fahrbaren Spüllösungsbehälters eingerichtet. Druckgaserzeugung und Einspeisung können beispielsweise durch eine hauseigene Quelle, aber auch geräteseitig erzeugt werden.

Die Proportionierung von Konzentrat und Permeat erfolgt mittels einer Konzentrat- und einer Spüllösungsbehälterwaage, wobei die Konzentratwaage in der Füllstation mit jedem Anhängen des befüllten Konzentratbehälters verfiziert wird.

Dazu beinhaltet auch der fahrbare Spüllösungsbehälter mit Vorteil eine Waage, die den Füllzustand überwacht und die aus Sicherheitsgründen mittels Referenzgewicht automatisch zu testen ist.

Zur Homogenisierung und Temperierung wird hochreines bzw. annähernd steriles Permeat erwärmt und mit zudosiertem Konzentrat in einem Mischblock gemischt.

Vor Einleitung in einen sterilen Spüllösungsbehälter-/Beutel erfolgte eine zweite Sterilfiltrierung der gemischten Lösung.

Die Reinigung des Systems bzw. Keimprävention und Reduktion werden durch die Kombination aus einem gering toxischen, auf Zitrat basierenden Desinfektions- u. Reinigungsmittel mit einer Wassererwärmung ausgeführt. Wobei sowohl die Primär-, als auch die Sekundärseite der Umkehrosmose getrennt voneinander mittels einer zusätzlichen Pumpe auch ohne transmembranen Fluss zu desinfizieren bzw. zu reinigen sind.

Prinzipiell werden dabei alle prozessrelevanten Daten sowohl vom Betriebs- als auch vom Schutzrechner erfasst und ggf. berechnet. Die Messergebnisse werden vom Betriebs- zum Schutzrechner und umgekehrt gesendet. Jeder Rechner vergleicht dabei die Messergebnisse mit den eigenen und gibt eine Bestätigung zurück.

Die Daten werden nach der Bestätigung von Betriebs- und Schutzrechner zusammen mit einer Prüfsumme in den Trenddatenspeicher geschrieben, der vorzugsweise als Eprom, aber auch als anderes Speichermedium ausgebildet sein kann.

Die Elektronik des fahrbaren Spüllösungsbehälters kann mittels aufladbaren Akkus betrieben werden, an der Anzeige des fahrbaren Spüllösungsbehälter werden alle erforderlichen Parameter als auch deren Abweichungen wie beispielsweise Gewicht, Temperatur und Behälterdruck angezeigt.

Indem ein drahtloser Datenaustausch zwischen Füllstation und fahrbarem Spüllösungsbehälter hergestellt wird, erfolgt beispielsweise die Überwachung der Befüllung, der Proportionalität und der Temperatur.

Weitere Einzelheiten und Vorteile sind in den nachfolgend dargestellten Figuren beschrieben.

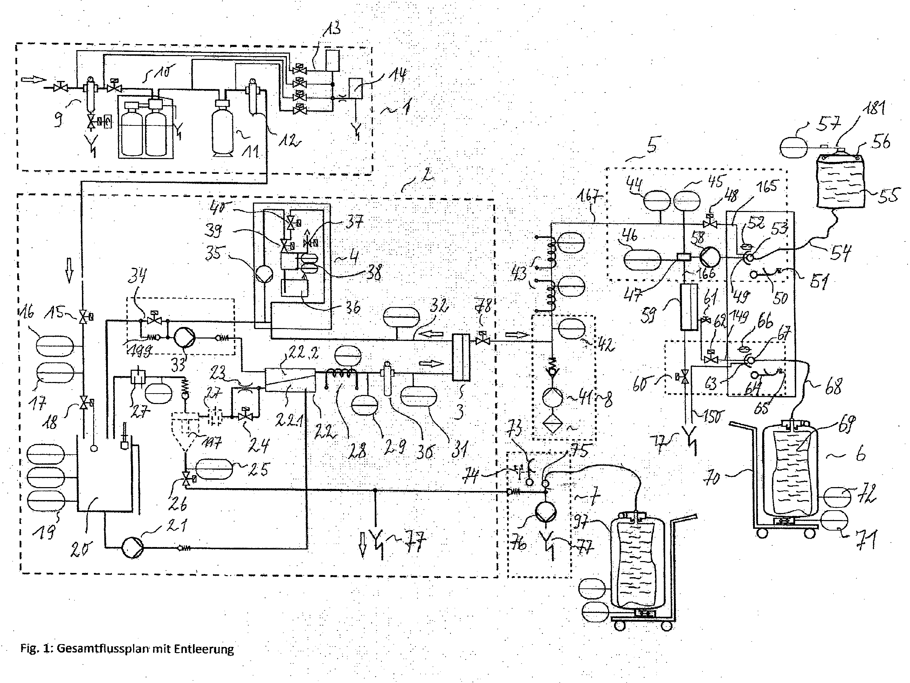

Dabei zeigt Figur 1 die prinzipielle Darstellung.

Gleichzeitig sind in der Figur weitere Ausführungsbeispiele und der Hinweis auf mögliche Abweichungen und Erweiterungen ausgeführt.

Die Flüssigkeit wird über eine optionale Vorfiltration (1) zur RO-Anlage (2) geführt.

Beispielsweise kann die Vorfiltration mit einem Grobfilter (9) einer Enthärtungsanlage (10) einem Kohlefilter (11) und Feinfilter (12) ausgestattet sein. Wahlweise ist durch die dargestellte aber nicht näher bezeichnete Ventilschaltung eine einstellbare Differenzdruckmessung (13) über den einzelnen Filterstufen bzw. eine Messung sonstiger Bestandteile z.B. Chlor mittels der Einrichtungen (14) möglich.

Im Eingangsbereich der RO-Anlage (2) befinden sich ein Wassereingangsventil (15), ein Zufluss- Flussmesser (16) und eine Eingangs-Rohwasser-Leitfähigkeitsmessung (17). Die zugeführte Flüssigkeit gelangt über ein schwimmergeregeltes Zuflussventil (18) in den Vorlaufbehälter (20) der mit Füllstandssensoren zur Leererkennung und Füllstandsregelung (19) ausgestattet ist.
Das schwimmergeregelte Zuflussventil (18) ist als Membran-Servoventil ausgebildet, dessen Servobohrung durch niedrigste Auftriebskräfte - also sehr kleine Schwimmervolumen- verschlossen werden kann und damit den Füllstand regelt. Darüber hinaus besteht die Möglichkeit mittels - nicht abgebildeten - elektromagnetischem Ventil den Servofluss zu unterbrechen, um so den Zulauf zu verhindern. Damit kann die Flüssigkeit ohne nennenswerten Strömungsverlust zum Vorlaufbehälter (20) gelangen.
Der Vorlaufbehälter beinhaltet einen Überlauf mit Detektion.
Die Pumpe (21) fördert die Flüssigkeit zur RO-Membran (22), wobei das Retentat über die Flussdrossel (23) mit Bypassventil (24) zurück zum Vorlaufbehälter (20) geführt wird.

Zur Einstellung des Wirkungsgrades ist der Abfluss-Flussmesser (25) vorgesehen, der zusammen mit dem Rohwasser-Flussmesser (16) die Wirkungsgrad-Berechnung bestimmt.

Überschüssiges bzw. das aus dem Ergebnis der Wirkungsgradberechnung ermittelte Retentatvolumen wird über Abflussventil (26) zum Abfluss (77) geführt und verworfen.

Zur Verminderung der im Retentatfluss befindlichen Partikel und Keime und zur Dekontamination ist eine optionale Zentrifugalkammer (197) mit Reinigungskammer (27) vorgesehen. Dabei werden Partikel im Retentat durch die Zentrifugalkraft am Boden des Trichters gesammelt und von dort bei geöffnetem Abflussventil (26) zur Drainage geleitet. Zur Verbesserung des Ausspülvorganges kann Ventil (24) zyklisch geöffnet werden.

Darüber hinaus kann durch eine Reinigungskammer (27) die mittels Spannungsimpulse wählbarer Frequenzen oder auch Magnetfeldeinflüsse auf die Flüssigkeit wirkt, eine Dekontamination bzw. Beeinflussung der schwer löslichen Calcium und Magnesium Salze so vorgenommen werden, dass eine Ablagerung derselben auf der Primärseite (22.1) der Membrane weitgehend vermieden werden kann.

Das erzeugte Permeat wird durch die Permeatleitfähigkeitsüberwachung (31) registriert. Alternativ kann eine zweite redundante Leitfähigkeitsmesszelle (46) mitverwendet werden.
Das durch die Leitfähigkeitsmesszelle (31) freigegebene Permeat wird durch den Sterilfilter (3) und das Permeatfreigabeventil (78) zum Anwendungsort über Anschluss (167) geführt.

Die Permeatrückführung erfolgt über Leitung (32). Dabei wird die Primärseite des Filters (3) vollständig überströmt und von Partikelrückständen befreit.

Zur Erzeugung eines Permeatdruckes wird ein Druckhalteventil (199) mit Permeatspülventil (34) verwendet. Überschüssiges Permeat gelangt auf diesem Weg zurück zum Vorlaufbehälter (20).

Eine chemothermische Desinfektion beginnt, indem die Pumpe (35) citrathaltiges Konzentrat aus Vorratskanister (36) ansaugt. Dabei ist das Ventil (39) geöffnet, Spülventil (40) und Zwangs-Belüftungsventil (37) sind geschlossen. Belüftungsventil (37) ist stromlos offen und kann als federbelastetes Schlauchklemmventil oder auch Hubventil ausgeführt sein. Die an Sicherheitskammer (38) angebrachten Füllstandssensoren (ohne Nummer) überwachen den Ansaugvorgang und damit auch den Füllstand im Vorratsgefäß (36).D.h. bei nicht eingeleitetr Desinfektion bzw. bei leerem Kanister (36) befindet sich kein Desinfektionsmittel in Kammer (38).

Bei laufender Pumpe (33) wird das Desinfektions-/Reinigungsmittel bis zum Erreichen einer vorbestimmten Leitfähigkeit durch das Permeatsammelrohr der Membrane (22) zirkuliert. Dabei kann die Leitfähigkeitskonzentration über die Messeinrichtung (31) überwacht werden. Es versteht sich, dass zur Aufnahme der zusätzlichen Flüssigkeit Ventile hin zum Abfluss oder hin zum Vorlaufbehälter kurzzeitig zu öffnen sind. Mittels Heizung (28) und Regelungssensor (29) wird die Flüssigkeit auf die gewünschte und voreingestellte Temperatur aufgewärmt. Dabei ist wahlweise eine chemothermische Desinfektion des gesamten hochreinen Sekundärbereiches (22.2, 3, 32) oder auch des Primärbereichs über (22.1) möglich. Bei Bedarf kann über das geöffnete Permeatspülventil (34) erwärmte Flüssigkeit zum Primärkreis (22.1) geführt werden, um die erforderliche Temperatur zu erreichen. Sobald Reinigungslösung mittels Desinfektionseinrichtung (4) über Vorlaufbehälter (20) in den Primärkreis (22.1) der Membran geführt wird, unterbricht der transmembrane Fluss. Pumpe (21) zirkuliert den Primärkreis (22.1) und reinigt bzw. desinfiziert dabei die gesamten flüssigkeitsführenden Komponenten.
Nach Abschluss der chemothermischen Desinfektion kann ein Freispülvorgang eingeleitet werden bis Leitfähigkeitszellen (31) respektive (46) "Desinfektionsmittelfreiheit" melden.

Während des Freispülvorgangs wird Desinfektionsspülventil (40) geöffnet um auch die desinfektionshaltige Leitung der Desinfektionseinheit (4) zu reinigen.

Um eine nachfolgende unbeabsichtigte Zuführung von Desinfektionsmittel in den Permeatkreislauf (32) zu vermeiden wird Belüftungsventil (37) geöffnet und die Niveaus in Kammer (38) überwacht. Somit ist eine sichere Vermeidung einer unbeabsichtigten Desinfektion gewährleistet.

Um einen Mischvorgang einzuleiten wird eventuell bereits von der RO-Anlage (2) vorgewärmtes Permeat über Heizer (43) und Temperaturregler (42/44) auf die erforderliche Spüllösungstemperatur erwärmt. Über Leitung (167) wird das Permeat einer Mischkammer (47) zugeführt, in die mittels Pumpe (58) Konzentrat aus Beutel (55) und Leitung (54), dem Konnektor (53) und geräteseitigem Anschlusskonnektor (49) zugeführt wird.
Dabei ist die Konzentratklappe (50) geöffnet, Detektor (52) meldet "offen", weil Magnet (51) die erforderliche Distanz überschritten hat. Das Konzentratspülventil (48) wird nur bei geschlossener Klappe (50) und entsprechend ausgewählten bzw. voreingestellten Spülprogrammen geöffnet, um den Anschlusskonnektor (49) zu reinigen.
Konzentratbeutel (55) ist mit seinen Aufhängungen (56) in entsprechende Haken des Auslegers (181) der Konzentratbeutelwaage (57) eingehängt.

Die zweite Leitfähigkeits- und Temperaturmessung (46) detektiert aus Gründen der Redundanz die entsprechenden Werte. Die durch Kammer (47) homogen gemischte und temperierte Spülflüssigkeit gelangt über Leitung (166) zu einem zweiten Sterilfilter (59). Fehlerhafte Spülflüssigkeit wird über Bypassventil (60) zum Abfluss (77) verworfen.
Bei geschlossenem Ventil (60) und geöffnetem Spüllösungsfreigabeventil (62) wird die Spülflüssigkeit über den geräteseitigen Spüllösungskonnektor (63) den daran konnektierten Beutelkonnektor (67), Leitung (68) zum fahrbaren Spüllösungsbehälter (6) geleitet, in dem ein steriler Spüllösungsbeutel (69) eingelegt ist. Die Möglichkeit zur Entnahme einer Spüllösungsprobenmenge besteht an Probeentnahme (61). Der fahrbare Spüllösungsbehälter (6) beinhaltet eine Waage (71), die den jeweiligen Füllstand bzw. das Gewicht der Spülmenge registriert. Ebenfalls ist ein Temperaturfühler (72) so angebracht, dass die Spülflüssigkeitstemperatur indirekt messbar ist.
Bei geschlossener Spüllösungsklappe (64) und bei Auswahl und Einleitung eines entsprechenden Spülprogrammes wird der geräteseitige Konnektor (63) mit steriler Flüssigkeit bzw. Reinigungslösung über Spülabfluss (150) gespült bzw. desinfiziert.

Der Integritätstest der Filter (3/59) erfolgt bei geschlossenen Klappen (50/64) durch gefilterte Luftzuführung mittels Luftpumpe (41) und kann wahlweise durch Ventilschaltung die Sekundärseite des Filters (3) oder die Primärseite des Filters (59) mit Luft beaufschlagen. Dabei wird die Flüssigkeit partiell durch die Luft verdrängt. Durch den hydrophilen Charakter der Filtermembran wird bei intakter Filtercharakteristik nur ein sehr geringer Druckabfall erfolgen, der mittels Drucksensor (45) und Elektronik (80) registriert bzw. überwacht werden kann.

Durch diesen Test können sowohl die Filter (3/59) als auch die Dichtheit der Klappen (50, 64) verifiziert bzw. überprüft werden.

Die nach Gebrauch möglicherweise vorhandenen Spüllösungsrestmengen im Beutel (69) können durch Konnektion der entsprechenden Leitung des Beutels (69) an Entleerungstülle (75) und Einschalten der Pumpe (76) in Abfluss (77) verworfen werden. Dazu wird Entleerungsklappe / Knebel (73) geöffnet. Klappenschalter (74) wird dadurch betätigt und schaltet Pumpe (76) ein.

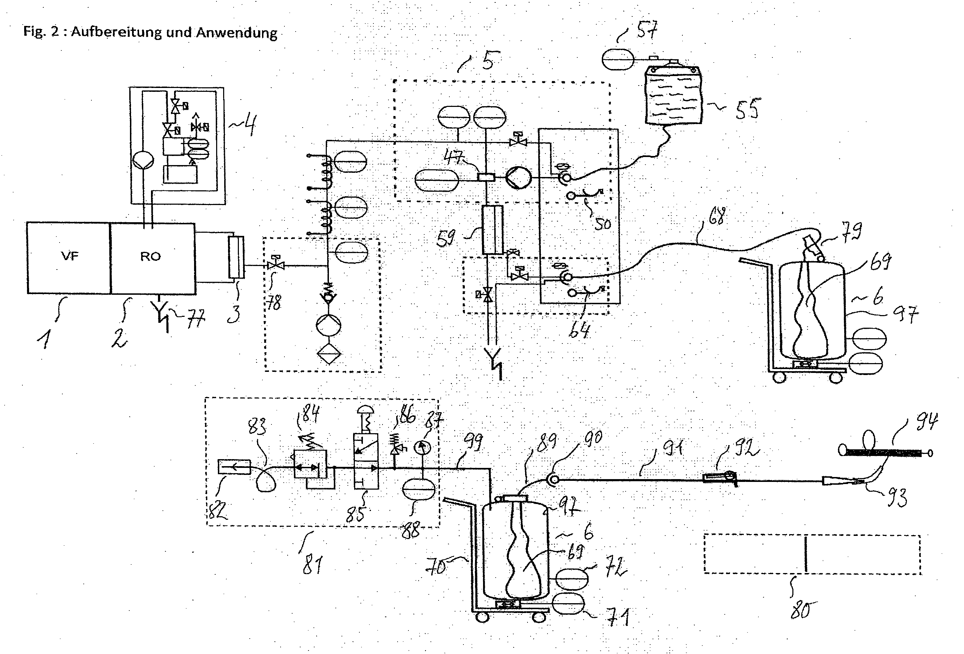

In Figur 2 ist schematisch ein möglicher Transfer der Spülflüssigkeit aus dem fahrbaren Spüllösungsbehälter (6) zu einem endoskopischen System bzw. an den chirurgischen Anwendungsort (94) dargestellt.

Druckluftkonnektor (82) kann mittels flexibler Schlauchleitungen (83) an eine hauseigene Druckgasquelle angeschlossen werden.
Zur Gewährleistung eines konstanten Spülflüssigkeitsflusses kann die Druckregeleinheit (81) einen einstellbaren Druckregler (84), einen Not-Aus mit Pilztaste und Zwangsentlüftung (85), ein manuelles Druckbegrenzungsventil (86), eine Manometeranzeige (87) und einen elektronischen Druckaufnehmer (88) beinhalten, der wie alle Sensoren und Aktoren mittels redundanter Elektronik (80) ausgewertet und dargestellt werden kann.
Das Niederdruck-Regelventil (84) ist einstellbar. Die Druckregeleinheit (81) ist vorteilhafterweise für einen Regelbereich von 0 bis 0,5bar ausgelegt und ist für den praktischen Einsatz auf 0,3 bar Förderdruck beispielsweise bei Prostata Operationen eingestellt. Die so geregelte Luft wird über Schlauchverbindung (99) in Druckbehälter (97) eingeleitet.
Die Spülflüssigkeit in Beutel (69) wird durch den zugeführten Druck über Transferanschluss (89) und einem geeigneten Überleitsystem (91) zum endoskopischen - oder anderen in der Chirurgie gebräuchlichen System (93) gefördert.

Zur Ergänzung wird festgestellt, dass zwischen Leitung (89) und dem Überleitsystem (91) ein weiterer hier nicht dargestellter Sterilfilter anschließbar wäre.
Ebenso bestünde die Möglichkeit, das geregelte Druckgasmedium direkt im Spüllösungsbeutel (69) einzuleiten bzw. gänzlich ohne Druckregeleinheit (81) und stattdessen mit einer geeigneten Pumpe die Spülflüssigkeit zum Anwendungsort (94) zu fördern. Ebenso ist statt der externen Luft- eine interne Luftzuführung vorstellbar.

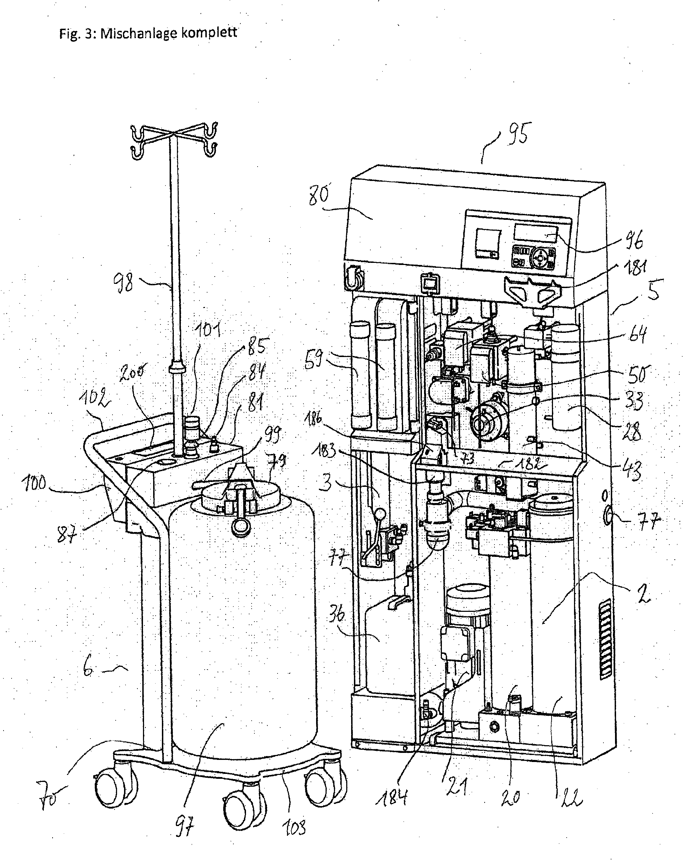

Figur 3 verdeutlicht räumlich die Gesamteinheit einer Mischanlage bzw. Füllstation. Aufgrund der angenommenen räumlich beengten Verhältnisse im Krankenhaus wurde die Füllstation (95) möglichst flach konstruiert um die Durchgänge an Fluren bzw. in Räumlichkeiten nicht zu beeinträchtigen. Dies erfordert eine vertikale Bauweise der RO-Anlage (2) mit Membran (22), Vorlaufbehälter (20) und Pumpe (21). Dargestellt ist auch ein Reinigungskanister (36).
Über der RO-Anlage ist die Mischeinheit (5) angebracht, wobei in dieser Zeichnung lediglich auf die Lage der Konzentratklappe (50), der Spüllösungsklappe (64). den Heizern (28/43) und der Sterilfilter (3/59) hingewiesen wird, um Handhabung und Aufbau zu verdeutlichen. Wobei die Klappen (50/64) hier im geschlossenen Zustand dargestellt sind.
Konzentratbeutelwaage (57) ist unterhalb der Elektronik (80) montiert und in Form eines Auslegers (181) mit Aufnahmehaken für den Konzentratbeutel dargestellt.
Die Installation erfolgt wandbündig an geeigneter Stelle mit entsprechendem Höhenabstand zum Fußboden, um Kommunikation - wie später erklärt- und Reinigung zu gewährleisten.

Der fahrbare Spüllösungsbehälter (6) besteht aus einem Transportwagen (70) mit Zug- und Schiebegriff (102), dem Druckbehälter (97), einem Deckel (79), und einer Infusionsstange (98).
Bestandteile des fahrbaren Spüllösungsbehälters (6) sind eine Druckregeleinheit (81), deren Ausgang direkt über eine flexible Schlauchverbindung (99) in den Druckbehälter (97) einmündet und eine Elektronik (100) mit einer Kommunikationsanzeige (200) beispielsweise zur Anzeige des Füllstandes, der Temperatur, Druckluft und anderer relevanter Werte und einer Anzeigeampel (101).

Die Kommunikation zwischen dem Spüllösungsbehälter (6) und der Füllstation (95) erfolgt drahtlos mittels Sensoren im Rollenbereich unterhalb der Bodenplatte (103) des fahrbaren Spüllösungsbehälters (6).

Füllstationsseitig ist auf gleicher Ebene unterhalb der Bodenplatte der Füllstation (95) ein korrespondierender Sensor angebracht. Die Detektion der Park- bzw.

Andockpositionen des Spüllösungsbehälters (6) an die Füllstation (95) ist durch die Lage der vorzugsweisen Infrarotsensoren vorgegeben.

Die weiteren Komponenten erklären sich teilweise aus der Darstellung oder werden zu einem späteren Zeitpunkt erläutert. Es versteht sich, dass es sich hier um einen raumsparenden Aufbau der Komponenten handelt, deren Anordnung von der dargestellten abweichen kann bzw. auch in anderen Ausführungsformen vorstellbar ist. Ebenso wurde nicht in allen Punkten Bezug auf die Kennzeichnung genommen.

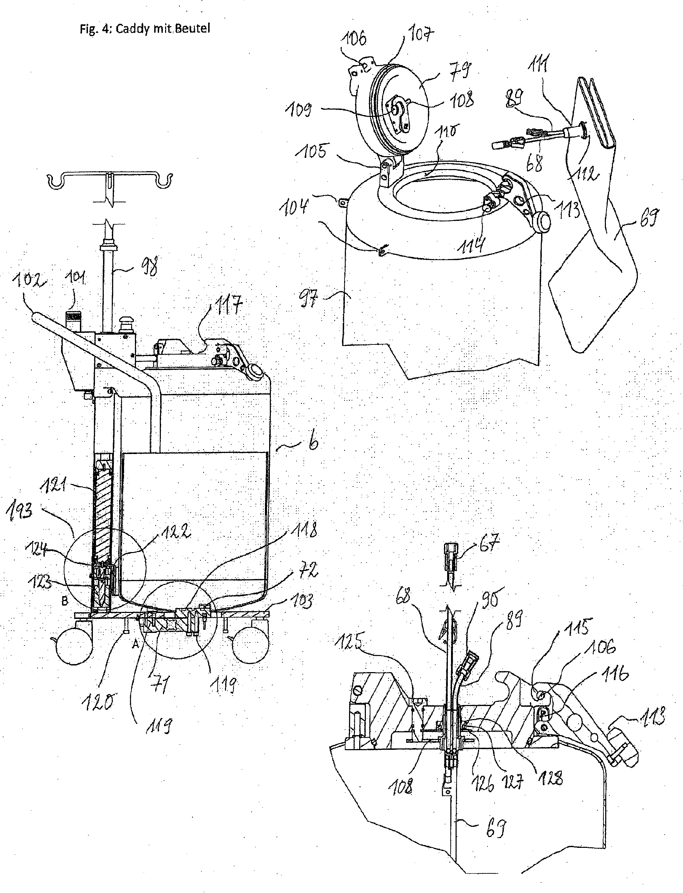

Figur 4 zeigt schematisch den Transportwagen (6) bzw. den Druckbehälter (97) mit geöffnetem Deckel (79) und einer Konnektoraufnahme (109), durch die der zylindrische Beutelkonnektor (111) eingesteckt wird, und mittels beweglicher Konnektorverriegelung (108) und Haltenut (112) gehalten wird.
Damit es zu einer formschlüssigen Abdichtung mit guten Gleiteigenschaften zwischen Konnektor (111) und Konnektoraufnahme (109) kommen kann, besteht vorzugsweise die Dichtung aus einem Tefloneinsatz (128), der mit einem O-Ring (127) und einer Druckplatte (126) so gegen Konnektor (111) gepresst wird, dass vorgenannte Ziele erreicht werden.
Eine formschlüssige und dichtende Verbindung des Deckels (79) zum Druckbehälter (97) wird einerseits durch Deckeldichtung (107) und dem konischen Dichtungslager (110) in der Druckbehälteröffnung im geschlossenen Zustand hergestellt.
Zum Verschließen zieht Haken (115) die Deckelverriegelung (106) mittels Verriegelungsgriff (113) in Position. Verriegelungssicherung (114) rastet dabei hinter dem Drehgelenk (116) ein.
Deckelklemmscharnier (105) hält Deckel (79) im geöffneten Zustand in aufrechter Position.

Es versteht sich, dass der Beutel (69) dazu in den Behälter einzubringen ist.
Zur vertikalen Abstützung sind am Druckbehälter (97) zwei seitliche Führungen (104) angebracht, die mit vertikalem Spiel mit Fahrgestell (70) verbunden sind.
Die Druckluftzuführung (99) ist beispielsweise im Scharnierbereich angebracht. Konnektorverriegelung (108) ist im Fehlerfalle von außen über Drehwelle (125) mittels Werkzeug zu öffnen.

Ebenfalls ist in dieser Figur die Füllleitung (68) mit Konnektor (67) dargestellt, die im Füllprozess an Anschluss (63) zu konnektieren ist. Nach dem Füllvorgang kann die Klemme in der Füllleitung (68) geschlossen werden, der fahrbare Spüllösungsbehälter (6) wird zum Anwendungsort gefahren und der Transferanschluss (89) ist mit einem entsprechenden Überleitsystem (91) zu konnektieren. Behälter (97) wird entsprechend mit geregeltem Druck beaufschlagt, damit eine kontinuierliche, pulsationsfreie Förderung gewährleistet ist.

Zur Differenzierung von Füllleitung (68) und Transferleitung (89) sind diese mit unterschiedlichen Konnektoren bestückt und in unterschiedlichen Längen, wie dargestellt, ausgeführt.
Zur Verdeutlichung der Behälterwaage zeigt der Ausschnitt A eine Wäage-Zelle (71), die einerseits am stabilen Unterteil (118) des Behälters (97) und andererseits an der Bodenplatte (103) mittels Schrauben (119) formschlüssig verbunden ist.
Ausschnitt B zeigt schematisch die Testeinrichtung (193) der Wäage-Zelle (71). An Druckbehälter (97) ist ein Testgewicht Aufnahme (122) angebracht. Der federunterstützte Plunger (124) des Zugmagneten (123) hält ein Testgewicht (121) auf Abstand zur Testgewicht-Aufnahme (122). Zyklisch wird der Abstand des Testgewichts durch Einschalten des Zugmagneten (123) aufgehoben, sodass das volle Testgewicht von Wäage-Zelle (71) registriert wird. Die Lage des Temperatursensors (72) als auch ein Anfahrschutz (120) sind ebenfalls dargestellt. Transportbehälter (6) kann mit einem Akku und / oder einer Stromversorgung ausgestattet sein; ebenso ist zur Erwärmung bzw. zur verlustfreien Speicherung der erwärmten Spülflüssigkeit eine Isolierung und /oder die Hinzunahme einer Heizung vorzugsweise als Folienheizung möglich.

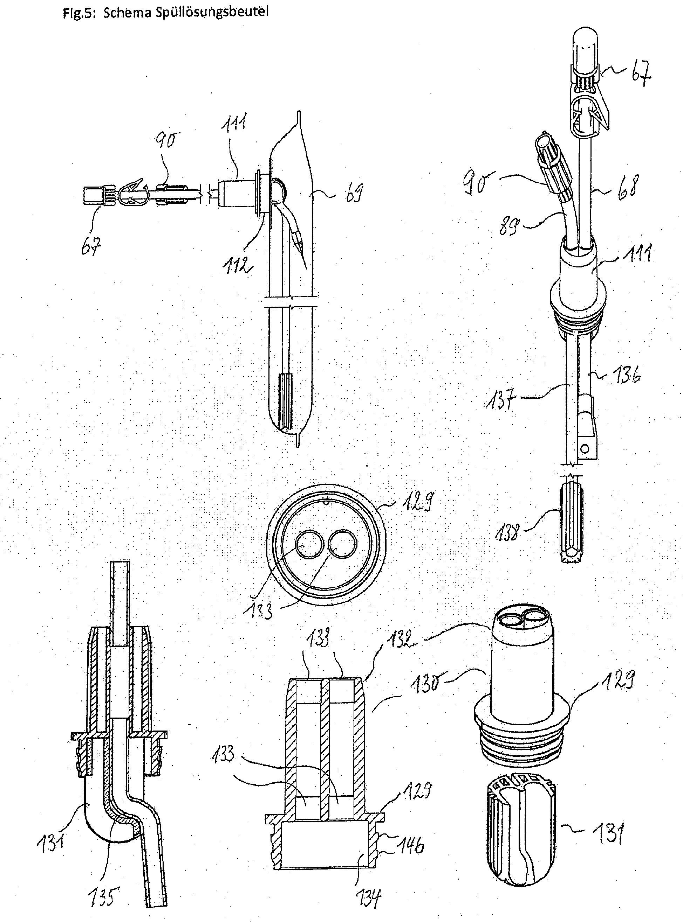

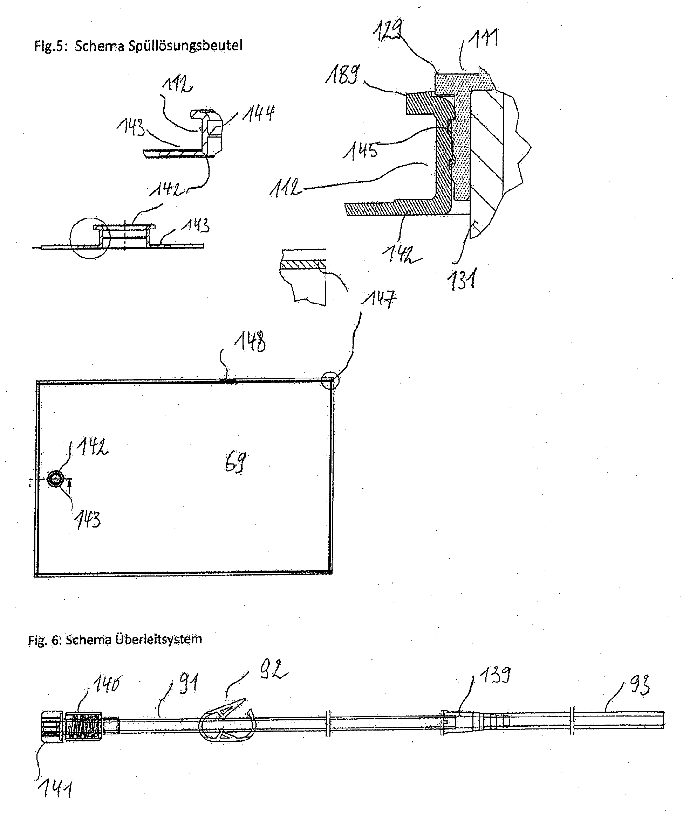

Dabei zeigt die Figur 5 schematisch den Spüllösungsbeutel (69) der aus einem mehrlagigen, toxikologisch unbedenklichen Material - vorzugsweise PE-Folie - besteht.

Der Beutel (69) hat eine rechteckige, geschweißte Kontur in die einseitig eine Beutel- und Konnektoraufnahme (142) kreisförmig (143) in die Folie eingeschweißt ist. Die Konnektoraufnahme (142) ist innenseitig radial mit mindestens 2 Rastzähnen (144) versehen, in die der Konnektor (111) so eingepresst wird, dass eine formschlüssige, dichtende, unlösbare Verpressung (145) entsteht. Konnektoraufnahme (142) ist u-förmig ausgeführt und hat einen Bund (189) für die Haltenut (112).

Der Konnektor (111) ist in Figur 5 zweiteilig ausgeführt, wobei auch einteilige, ähnliche Geometrien im Rahmen der Erfindung möglich sind. In der dargestellten Version besteht Konnektor (111) aus einem Vorderteil (130), dessen wesentliche Bestandteile die Schlauchklebestellen (133), in die innerhalb und außerhalb die Transfer- und Füllleitungen vorzugsweise eingeklebt sind, sowie der Einpressanschlag (129) und die Konnektorrastzähne (146).
Zum leichteren Einführen in die Konnektor-Aufnahme (109) des Deckels (79) beinhaltet das Vorderteil (130) einen Anschnitt (132). Rückwärtig ist eine Aufnahme (134) für den Knickschutz (131) der inneren Leitungen (136/137) vorgesehen.

Im eingebauten Zustand wird der Beutelkonnektor (111) vertikal mit Konnektorverriegelung (108) in Haltenut (112) befestigt.

Bei geschlossenem Deckel (79) erfolgt eine Verdrehung des Beutels (69) um ca. 90° gegen den Konnektor (111) und damit auch eine Lageveränderung der inneren Transfer- (137) und Füllleitung (136). Der Knickschutz (131) beinhaltet Schlauchführungen (135), die ein eventuelles Abknicken derselben verhindern sollen.

Die Transferleitung (137) schließt am unteren Ende mit einem Schlauchgewicht (138) ab, welches an allen Außenseiten Konturen aufweist, um zum einen eine vollständige Entleerung des Beutels bei zusammengedrückter Folie zu gewährleisten und um einem eventuellen Auftrieb der Transferleitung (137) entgegenzuwirken.

Zur Vermeidung einer Berührungskontaminierung können die Konnektoren (67) und (90) Schutzkappen mit Öffnungen für die Begasungen zwecks Sterilität beinhalten.

Die Folien des Beutels (69) sind umfangsseitig so verschweißt (147), dass ein Schweißsteg von min. größer 2 mm vorliegt um eine Ruptur zu vermeiden.

Bereits dargestellt in Figur 4 ist eine mögliche Faltung des Beutels (69), die ein leichteres Einlegen in die Druckbehälteröffnung (110) ermöglicht.

Wobei Beutel (69) auch in andere als in der Beschreibung dargestellten Kontur bzw. Form ausführbar ist.
Darüberhinaus ist bei Einsatz einer zusätzlichen in den Figuren nicht dargestellten Pumpe eine Zirkulation der im Beutel befindlichen Flüssigkeit über die beiden Anschlüsse des Konnektors (111) durchführbar, um Homogenität, Temperatur oder eine bereits im Beutel befindliche Flüssigkeit zu verbessern bzw. aufzubereiten. Beutel (69) bzw. Beutelkonnektor (111) kann auch nur mit einem inneren wie äußeren Schlauch bestückt werden,. der sowohl als Transfer- als auch als Füllschlauch zu nutzen ist, wenn keine hygienischen bzw. Sterilitätsanforderungen dagegen stehen.

Figur 6 zeigt das Schema eines Überleitsystems (91) welches mit seinem Konnektor (140) an den Transferanschluss (90) adaptiert werden kann und mit dem konischen Anschlussstück (139) bzw. einem daran folgenden Silikonschlauchstück (93) an ein in der Chirurgie übliches Endoskopie- oder auch Spülsystem anschließbar ist.
Der Konus (139) ermöglicht die Aufnahme unterschiedlicher Silikonschlauchdurchmesser (93) um unterschiedliche, in der Chirurgie gebräuchlichen System anzuschließen.
Die Schlauchklemme (92) kann vorteilhafterweise auch als Rollenklemme zur Regelung des Spülflusses ausgeführt sein.
Die Länge des Überleitsystems (91) ist frei wählbar und in seinem Durchmesser dem gewünschten Spülfluss anzupassen, wobei für das gezeigte System ein Schlauchinnendurchmesser von ca. 7 mm gewählt wurde.
Aus Gründen der Sterilität wurde Anschluss (140) mit einer begasbaren Kappe (141) bestückt.

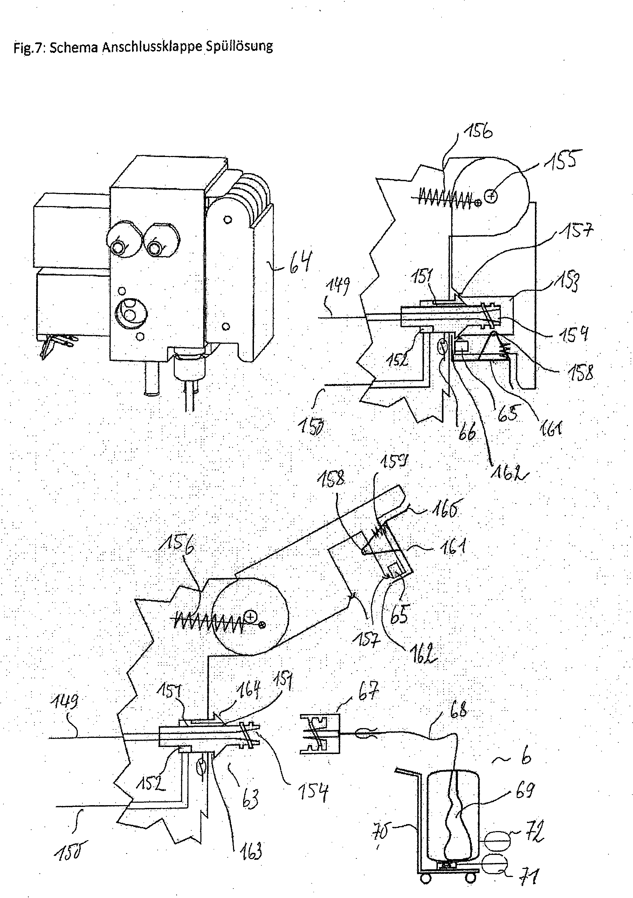

Figur 7 zeigt perspektivisch schematisch die Spüllösungsklappe (64), deren Öffnen, Verschluss, Aushub- und Reinigungsvorgang wie folgt beschrieben wird.
In der Klappe (64) befindet sich ein Magnet (65), der bei geschlossener Klappe (64) einen magnetischen Kontakt (66) aktiviert.
Zum Spülen wird die Klappe (64) geschlossen, sodass der Klappenverriegelungshaken (162) der Klappenverriegelung (161) in den Verriegelungsbund (163) des Anschlußkonnektors (63) einrastet.
Durch Zurückdrücken der Verriegelung (161) über Drehpunkt (158) mittels Klappenverriegelungsgriff (160) wird die Verriegelungsfeder (159) gestaucht und der Klappenverriegelungshaken (162) gibt dabei den Aushubprozess der Klappe (64) frei. Die Klappe schwenkt nach oben. Unterstützt wird dies durch Aushubfeder (156), die seitlich des Klappendrehpunktes (155) eingreift.
Zur vollständigen Spülung des Konnektors (63) drückt die Dichtung (157) bei geschlossener Klappe formschlüssig auf den Außenkonus (164) des Konnektors (63).
Die Spülflüssigkeit gelangt über Anschluss (149) über den Innenkegel (154) zum Spülraum (153) und von dort über die umfangseitig angebrachten Spülbohrungen (151) des Konnektors (63) in den Ringspalt (152), von dem der Spülabfluss (150) erfolgt.

Aus Gründen der Verwechslungssicherheit für die Anwendung wurde die technische Ausführung der Spüllösungsanschlüsse unterschiedlich zu denen der Konzentratanschlüsse konstruiert.

Der Spüllösungskonnektor (63) ist beispielsweise mit einem Innenkegel (154) 1 zu 16 und einem zweigängigen Außengewinde 13x8 ausgeführt. Am Spüllösungsbeutel (69), der als Einmalartikel ausgeführt ist, befindet sich die Füllleitung (68) mit Einmalkonnektor (67), der als männlicher Konnektor beispielsweise mit frei drehbarer Überwurfmutter mit Innengewinde 13x8 und einem innenliegenden Aussenkegel 1 zu 16 so ausgestattet ist, dass im gekoppelten Zustand eine formschlüssige, dichtende Verbindung durch die beiden Kegel und Gewinde gewährleistet ist. In die Füllleitung (68) kann eine Schlauchklemme montiert werden.

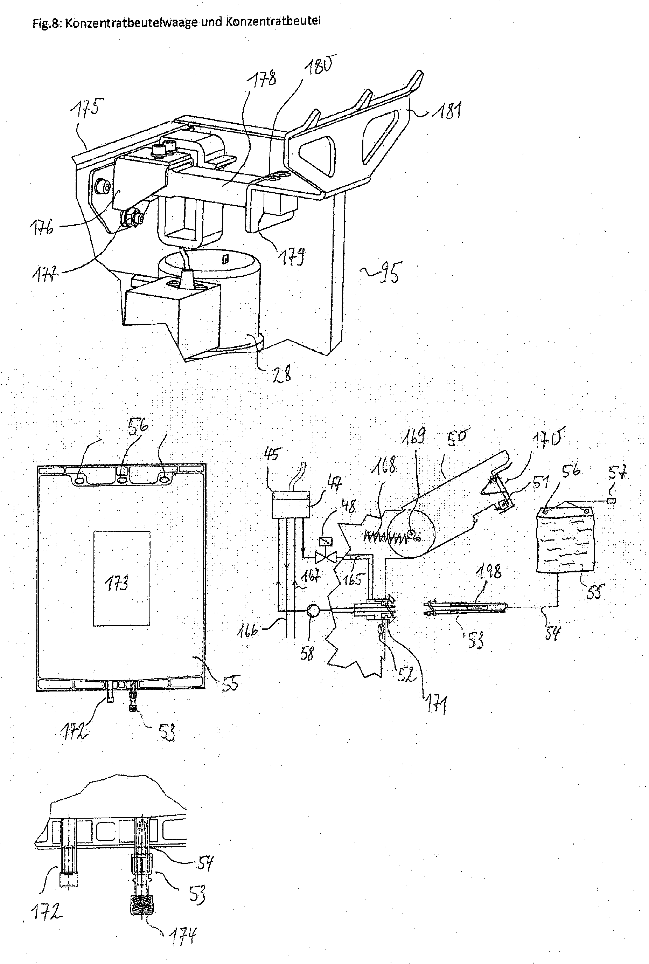

Dabei zeigt die Figur 8 schematisch den Konzentratbeutel (55) der aus einem, toxikologisch unbedenklichen Material - vorzugsweise PE-Folie - besteht.
Der Beutel (55) hat eine rechteckige, geschweißte Kontur.
Beutelfüllungen von ca. 1 - 5 Liter können die in der Chirurgie gebräuchlichen Konzentrate und deren Rezepturen zur Herstellung der geforderten Spüllösung abdecken.
Zum Anschluss an den geräteseitigen Konnektor (49) kann der Anschlussschlauch (54) in unterschiedlichen Längen ausgeführt sein. Beutel (55) wird mit seinen Einhängöffnungen (56) in den Ausleger (181) eingehängt. Ausleger (181) weist eine z-förmige Biegung auf und ist zur Versteifung und formschlüssigen Verbindung mit Ausbruch (179) mittels Schrauben (180) an Biegebalken (178) befestigt. Der Biegebalken (178) ist mit seinem rückwärtigen Ende mit einem Tragarm (176) verschraubt, der seinerseits mit der Rückwand (175) der Füllstation (95) einstellbar mittels Einstellschraube (177) verbunden ist.

Es versteht sich, dass zu Beginn des Mischprozesses die Sterilschutzkappe (174) zu entfernen und der Brechkonus (198) zu brechen ist. Füllanschluss (172) ist verschweißt.

Die Funktion der Konzentratklappe (50) wie auch die Konzentratzuführung aus Beutel (55) über Pumpe (58), der Mischprozess und das Spülverfahren wurden bereits in Figur 1 beschrieben. Die Klappenfunktion ist gleich der bereits beschriebenen Funktion der Spülklappe.

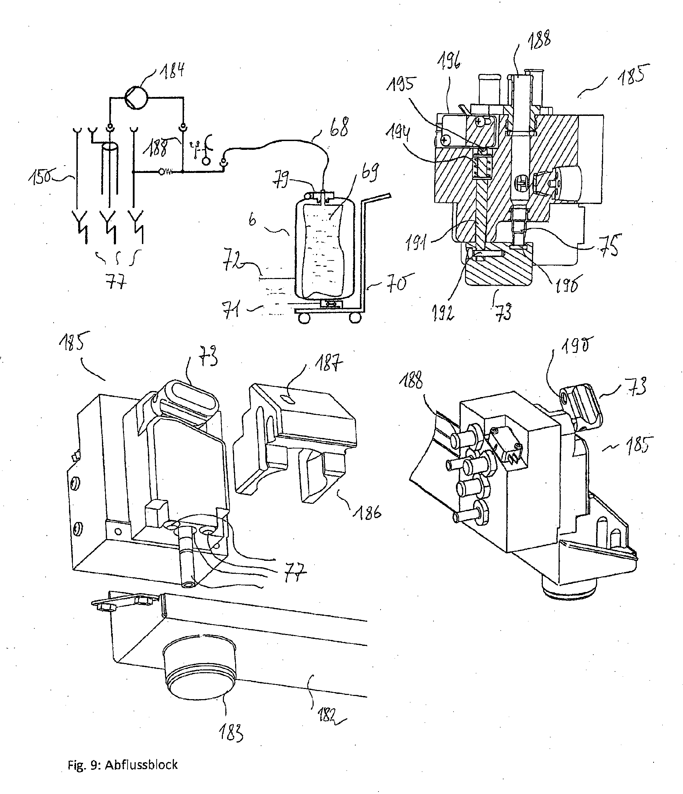

Figur 9 zeigt schematisch und perspektivisch die Entleerung des Spüllösungsbeutels (69) und den Aufbau des Abflussblockes (185).
Insgesamt beinhaltet der Abflussblock (185) vier Abflüsse, die alle in einen Siphon/Abfluss (77) einmünden. Abflussrinne (182) dient dem Auffangen von Restflüssigkeiten die beim Anschließen der Beutel bzw. Öffnen der Klappen entstehen könnten.
Zur Vermeidung von Verbrennungen oder Verätzungen bei chemischer Desinfektion kann ein Spritzschutz (186) so in die Rinne (182) eingehakt werden, dass die Abflüsse verdeckt sind, aber über die Testöffnung (187) eine Rückstandsprobe möglich ist. Erkennbar in der Schnittdarstellung ist die Entleerungsklappe (73), die mittels einer Verstiftung (192) an einer Drehwelle (191) angebracht ist. Die Entleerungsklappe (73) beinhaltet eine Sackbohrung mit innenliegender Dichtung (190). Im geschlossenen Zustand der Klappe (73) liegt die Dichtung stirnseitig auf der Entleerungstülle (75). Zum Öffnen wird Klappe (73) nach vorne gezogen und nach oben geschwenkt. Dadurch wird Schalternocke (195) des Entleerungsschalters (196) frei und Pumpe (184) beginnt zu saugen. Gleichzeitig wird Rückholfeder (194) vorgespannt, weil Klappe (73) im herausgeschwenkten Zustand eine Halteposition erhält, die die Drehwelle (191) auf Abstand zur Schalternocke (195) hält.
Zum Schließen und Beenden des Entleerungsvorganges wird Klappe (73) in ihre Ursprungsstellung zurück gestellt. Rückholfeder (194) positioniert die Dichtung (190) formschlüssig auf die Tülle (75). Gleichzeitig wird Schalter (196) bzw. Schaltnocke (195) wieder betätigt.

**Legende**

| | |
|---|---|
| 1. | Vorfiltration |
| 2. | RO-Anlage |
| 3. | Permeat Ultra-/Sterilfilter 1 |
| 4. | Desinfektionseinheit |
| 5. | Mischeinheit |
| 6. | Transportwagen |
| 7. | Entleerung |
| 8. | Luftdruckzuführung |
| 9. | Grobfilter |
| 10. | Enthärter |
| 11. | Kohlefilter |
| 12. | Feinfilter |
| 13. | Druckmessung |
| 14. | Chlor- / Kalziummessung |
| 15. | Wassereingangsventil |
| 16. | Flussmesser |
| 17. | Leitfähigkeits- / Temperaturanzeige |
| 18. | Schwimmerventil |
| 19. | Niveausensor |
| 20. | Vorlaufbehälter |
| 21. | Druckerhöhungspumpe |
| 22. | RO-Membran |
| 22.1 | Primärseite |
| 22.2 | Sekundärseite |
| 23. | Hochdruckdrossel |
| 24. | Bypass-Ventil |
| 25. | Abfluss-Flussmesser |
| 26. | Abflussventil |
| 27. | Reinigungskammer |
| 28. | Heizung Permeatkreis mit Übertemperaturschutz |
| 29. | Temperaturregler |
| 30. | Permeatverbesserung |
| 31. | Leitfähigkeitsmesszelle |
| 32. | Permeatkreislauf |
| 33. | Permeatzirkulationspumpe |
| 34. | Permeatspülventil |
| 35. | Desinfektionspumpe |
| 36. | Desinfektionsmittelkanister |
| 37. | Lüftungsventil |
| 38. | Sicherkeitskammer mit Niveaudetektoren |
| 39. | Desinfektionsfreigabeventil |
| 40. | Desinfektionsspülventil |
| 41. | Druckluftpumpe |
| 42. | Temperaturregler |
| 43. | Heizung mit Übertemperaturschutz |
| 44. | Temperaturregler |
| 45. | Drucksensor |
| 46. | Redundante Leitfähigkeits- / Temperaturmessung |
| 47. | Mischkammer |
| 48. | Konzentratspülventil |
| 49. | Geräteseitiger Konzentratanschlusskonnektor |
| 50. | Konzentratanschlussklappe |
| 51. | Magnet |
| 52. | Magnetischer Sensor |
| 53. | Konzentratbeutelkonnektor mit Brechkonus mit 2-gängigem Außengewinde und Innenkonus |
| 54. | Konzentratanschlussleitung |
| 55. | Konzentratbeutel |
| 56. | Aufhängösen |
| 57. | Konzentratwaage |
| 58. | Konzentratpumpe |
| 59. | Sterilfilter 2 |
| 60. | Spüllösungsbypassventil |
| 61. | Probeentnahmeventil |
| 62. | Spüllösungsfreigabeventil |
| 63. | Geräteseitiger Spüllösungsanschlusskonnektor |
| 64. | Spüllösungsklappe |
| 65. | Magnet |
| 66. | Magnetischer Sensor |
| 67. | Spüllösungsbeutelanschlusskonnektor |
| 68. | Füllleitung |
| 69. | Spüllösungsbeutel |
| 70. | Fahrgestell |
| 71. | Spüllösungsbehälterwaage |
| 72. | Temperatursensor |
| 73. | Entleerungklappe / Knebel |
| 74. | Klappendetektor |
| 75. | Entleerungsanschluss |
| 76. | Entleerungspumpe |
| 77. | Abfluss |
| 78. | Permeatfreigabeventil |
| 79. | Deckel SpüHösungsbehälter |
| 80. | Elektronik |
| 81. | Druckregeleinrichtung |
| 82. | Druckluftkonnektor |
| 83. | Schlauchverlängerung |
| 84. | Druckregler |
| 85. | Not-Aus mit Entlüftung |
| 86. | Druckbegrenzungsventil |
| 87. | Manometer |
| 88. | Drucksensor |
| 89. | Transferleitung |
| 90. | Transferkonnektor |
| 91. | Überleitsystem |
| 92. | Klemme |
| 93. | Anschluss für Chirurgiegeräte |
| 94. | OP-Bereich |
| 95. | Füllstation |
| 96. | Displaytastatur / Drucker |
| 97. | Druckbehälter |
| 98. | Infusionsstange |
| 99. | Druckluftverbindungsschlauch |
| 100. | Transportwagenelektronik mit Display |
| 101. | Ampel |
| 102. | Schiebegriff |
| 103. | Bodenplatte |
| 104. | Seitliche Stabilisierung Druckbehälter |
| 105. | Klemmscharnier Deckel |
| 106. | Deckelverriegelung |
| 107. | Deckeldichtung |
| 108. | Verriegelung Beutelkonnektor |
| 109. | Konnektoraufnahme mit innenliegender Gleitringdichtung |
| 110. | Behälteröffnung mit konischer Dichtungsaufnahme |
| 111. | Beutelkonnektor |
| 112. | Nut Beutelkonnektor |
| 113. | Verriegelungsgriff |
| 114. | Verriegelungssicherung |
| 115. | Haken Verriegelungsgriff |
| 116. | Drehgelenk |
| 117. | Deckel-Hebegriff |
| 118. | Bodenplatte Druckbehälter |
| 119. | Befestigungsschrauben |
| 120. | Transportsicherungsbolzen |
| 121. | Testgewicht |
| 122. | Testgewicht-Aufnahme |
| 123. | Zugmagnet |
| 124. | Hebefeder |
| 125. | Verriegelungsdrehwelle mit Innensechskant |
| 126. | Druckplatte |
| 127. | O-Ring |
| 128. | Tefloneinsatz |
| 129. | Anschlag Beutelkonnektor |
| 130. | Beutelkonnektor Vorderteil |
| 131. | Beutelkonnektor Knickschutz |
| 132. | Konnektoreinführfase |
| 133. | Schlauchklebestellen |
| 134. | Aufnahme Knickschutz |
| 135. | Schlauchführung |
| 136. | Innere Füllleitung mit optionalem Rückschfagventil |
| 137. | Innere Transferleitung |
| 138. | Gewicht |
| 139. | Konus geriffelt (5-10 mm) |
| 140. | Patientenkonnektor mit Überwurfmutter |
| 141. | Begasungskappe / Berührschutz |
| 142. | Konnektoraufnahme |
| 143. | Kreisförmige Folienanschweißstelle |
| 144. | Rastzähne Konnektoraufnahme |
| 145. | Konnektorverpressung |
| 146. | Rastzähne Beutelkonnektor |
| 147. | Umfangseitige Beutelverschweißüng |
| 148. | Beutelbeschriftung |
| 149. | Spüllösungsleitung |
| 150. | Spüllösungsspülleitung |
| 151. | Umfangsseitige Spüllösungsbohrung |
| 152. | Ringspalt |
| 153. | Spülraum |
| 154. | Innenkegel Spüllösungskonnektor |
| 155. | Klappendrehpunkt |
| 156. | Aushubfeder |
| 157. | Klappendichtung |
| 158. | Verriegelungsdrehpunkt |
| 159. | Verriegelungsrückholfeder |
| 160. | Verriegelungsgriff |
| 161. | Verriegelung |
| 162. | Klappenverriegelungshaken |
| 163. | Verriegelungsbund |
| 164. | Dichtungsgegenlager |
| 165. | Konzentratspülleitung |
| 166. | Spüllösungsleitung |
| 167. | Permeatversorgungsleitung |
| 168. | Aushubfeder Konzentratklappe |
| 169. | Drehpunkt Konzentratklappe |
| 170. | Verriegelung Konzentratklappe |
| 171. | Verriegelungsbund Konzentratklappe |
| 172. | Füllanschluss |
| 173. | Beschriftung |
| 174. | Verschlusskappe |
| 175. | Füllstation Rückwand |
| 176. | Auslegerbefestigung für Wäagezelle |
| 177. | Einstellschraube für Wäagezelle |
| 178. | Biege-Balken-Wäagezelle |
| 179. | Ausbruch |
| 180. | Befestigungsschrauben |
| 181. | Konzentratwaagen-Ausleger mit Beuteleinhänghaken |
| 182. | Rinne |
| 183. | Siphonanschluss |
| 184. | Entleerungspumpe |
| 185. | Abflussblock |
| 186. | Spritzschutz |
| 187. | Probeöffnung |
| 188. | Anschlusstülle für Entleerungspumpe |
| 189. | Bund für Haltenut |
| 190. | Dichtung Entleerungstülle |
| 191. | Drehwelle Entleerungsklappe |
| 192. | Befestigungssicherung Drehwelle |
| 193. | Testeinrichtung Wäage-Zelle |
| 194. | Rückholfeder für Entleerungsklappe |
| 195. | Schalternocke |
| 196. | Entleerungsschalter |
| 197. | Zentrifugalkammer |
| 198. | Brechkonus |
| 199. | Permeat-Druckhalteventil |
| 200. | Anzeige fahrbarer Spüllösungsbehälter |

## Patentansprüche

1. Mischanlage für gebrauchsfertige Spüllösungen, enthaltend
eine RO-Anlage (2),
eine Mischeinheit (5), die mit der RO-Anlage (2) verbunden ist und eine Mischkammer (47), der hochreines Wasser von der RO-Anlage (2) und Spüllösungskonzentrat von einer Konzentratquelle (55) zuführbar ist, und einen Spüllösungsanschlusskonnektor (63) enthält,
eine Rechner- und Steuereinrichtung für alle Mess- und Überwachungsaufgaben bei der Vor-Ort-Herstellung einer Spüllösung, wobei die RO-Anlage und die Mischeinheit (5) eine Füllstation (95) bilden, und einen Transportwagen (70), der einen Druckbehälter (97) enthält, der einen Spüllösungsbeutel (69) aufnimmt, der an den Spüllösungsanschlusskonnektor (63) der Mischeinheit (5) ankoppelbar ist,
wobei der Transportwagen (70)und die Füllstation (95) mit Sensoren versehen sind, die unterhalb einer Bodenplatte (103) des Transportwagens (70) und auf gleicher Ebene unterhalb einer Bodenplatte der Füllstation (95) angebracht sind, durch die eine drahtlose Kommunikation zwischen dem Transportwagen (70) und der Füllstation (95) ermöglicht und eine Andockposition des Transportwagens (70)an die Füllstation (95) vorgegeben ist.

2. Mischanlage nach Anspruch 1,
**dadurch gekennzeichnet,**
**dass** die Sensoren Infrarotsensoren sind.

3. Mischanlage nach den Ansprüchen 1 oder 2,
**dadurch gekennzeichnet,**
**dass** die RO-Anlage (2) eine Desinfektionseinheit (4) mit einer Pumpe (35) aufweist, die mit dem Sekundärkreis der RO-Membran (22) verbunden ist und deren Desinfektions- und Reinigungsmittel auch in den Primärkreis verteilbar ist.

4. Mischanlage nach einem der Ansprüche 1 bis 3,
**dadurch gekennzeichnet,**
**dass** eine Permeatversorgungsleitung (167) der Mischeinheit (5) mit der Sekundärseite eines Permeat-Sterilfilters (3) der RO-Anlage (2) verbunden ist und ein Permeatfreigabeventil (78) aufweist.

5. Mischanlage nach einem der Ansprüche 1 bis 4,
**dadurch gekennzeichnet,**
**dass** die Konzentratquelle einen Konzentratbeutel (55) aufweist, der mit einer Konzentratwaage (57) verbunden ist.

6. Mischanlage nach einem der Ansprüche 1 bis 5,
**dadurch gekennzeichnet,**
**dass** der Konzentratbeutel (55) über einen Konzentratbeutelkonnektor (53) mit einem geräteseitigen Konzentratanschlusskonnektor (49) verbindbar ist.

7. Mischanlage nach einem der Ansprüche 1 bis 6,
**dadurch gekennzeichnet,**
**dass** der Spüllösungsbeutel (69) über einen Spüllösungsanschlusskonnektor (67) mit dem geräteseitigen Spüllösungsanschlusskonnektor (63) verbindbar ist.

8. Mischanlage nach einem der Ansprüche 1 bis 7,
**dadurch gekennzeichnet,**
**dass** die geräteseitigen Anschlusskonnektoren (49,63) Anschlussklappen aufweisen, die in Desinfektionskreisläufe eingeschaltet sind.

9. Mischanlage nach einem der Ansprüche 1 bis 8
**dadurch gekennzeichnet,**
**dass** der Druckbehälter (97) auf dem Transportwagen (70) angeordnet ist, der eine Spüllösungsbehälterwaage (71) und einen Temperatursensor (72) enthält.

10. Mischanlage nach einem der Ansprüche 1 bis 9,
**dadurch gekennzeichnet,**
**dass** der Spüllösungsbeutel (69) mit einer Transferleitung (89) und einem Transferkonnektor (90) versehen ist zur Verbindung mit einem Überleitungssystem (91), das einen Anschluss für ein Chirurgiegerät enthält.

11. Mischanlage nach einem der Ansprüche 1 bis 10,
**dadurch gekennzeichnet,**
**dass** der Spüllösungsbeutel (69) über eine Füllleitung (68) mit einem Anschlusskonnektor eines Abflussblocks (185) verbindbar ist.

## Claims

1. A mixing installation for ready-to-use flushing solutions including
an RO system (2),
a mixing unit (5), which is connected to the RO system (2), and a mixing chamber (47) to which the ultrapure water from the RO system (2) and flushing solution concentrate from a concentrate source (55) may be supplied, and includes a flushing solution connector (63),
a computing and control device for all measuring and monitoring functions in the in situ production of a flushing solution, wherein the RO system and the mixing unit (5) constitute a filling station (95),
and a transport carriage (70), which includes a pressure container (97), which receives a flushing solution bag (69), which may be coupled to the flushing solution connector (63) of the mixing unit (5),
wherein the transport carriage (70) and the filling station (95) are provided with sensors, which are attached beneath a base plate (103) of the transport carriage (70) and at the same level beneath a base plate of the filling station (95), by which wireless communication between the transport carriage (70) and the filling station (95) is enabled and a docking position of the transport carriage (70) at the filling station (95) is defined.

2. A mixing installation as claimed in Claim 1, **characterised in that** the sensors are infrared sensors.

3. A mixing installation as claimed in Claims 1 or 2, **characterised in that** the RO system (2) includes a disinfection unit (4) with a pump (35), which is connected to the secondary circuit of the RO membrane (22) and whose disinfection and cleaning agent may be distributed also into the primary circuit.

4. A mixing installation as claimed in one of Claims 1 to 3, **characterised in that** a permeate supply conduit (167) of the mixing unit (5) is connected to the secondary side of a permeate sterile filter (3) of the RO system (2) and includes a permeate release valve (78).

5. A mixing installation as claimed in one of Claims 1 to 4, **characterised in that** the concentrate source includes a concentrate bag (55), which is connected to a concentrate weighing machine (57).

6. A mixing installation as claimed in one of Claims 1 to 5, **characterised in that** the concentrate bag (55) is connectable by means of a concentrate bag connector (53) to a concentrate connector (49) on the device.

7. A mixing installation as claimed in one of Claims 1 to 6, **characterised in that** the flushing solution bag (69) is connectable to the flushing solution connector (63) on the device via a flushing solution connector (67).

8. A mixing installation as claimed in one of Claims 1 to 7, **characterised in that** the connectors (49, 63) on the device include connector flaps, which are connected into disinfection circuits.

9. A mixing installation as claimed in one of Claims 1 to 8, **characterised in that** the pressure container (97) is arranged on the transport carriage (70), which includes a flushing solution container weighing machine (71) and a temperature sensor (72).

10. A mixing installation as claimed in one of Claims 1 to 9, **characterised in that** the flushing solution bag (69) is provided with a transfer conduit (89) and a transfer connector (90) for connection to a transfer system (91), which includes a connector for a surgical device.

11. A mixing installation as claimed in one of Claims 1 to 10, **characterised in that** the flushing solution bag (69) is connectable via a filling conduit (68) to a connector on a discharge block (185).

## Revendications

1. Installation de mélange pour des solutions de rinçage prêtes à l'emploi, contenant
une installation à osmose inversée (2),
une unité de mélange (5), qui est reliée à l'installation à osmose inversée (2) et qui contient une chambre de mélange (47), à laquelle peuvent être amenés de l'eau hautement pure provenant de l'installation à osmose inversée (2) et un concentré de solution de rinçage provenant d'une source de concentré (55), et un connecteur de raccordement de solution de rinçage (63),
un dispositif calculateur et de commande pour toutes les activités de mesure et de surveillance lors de la fabrication sur site d'une solution de rinçage,
dans laquelle l'installation à osmose inversée et l'unité de mélange (5) forment une station de remplissage (95),
et un chariot de transport (70), qui contient un contenant sous pression (97), qui reçoit un sachet de solution de rinçage (69), qui peut être couplé au connecteur de raccordement de solution de rinçage (63) de l'unité de mélange (5),
dans laquelle le chariot de transport (70) et la station de remplissage (95) sont pourvus de capteurs, qui sont installés sous une plaque de fond (103) du chariot de transport (70) et sur un même plan sous une plaque de fond de la station de remplissage (95), qui rendent possible une communication sans fil entre le chariot de transport (70) et la station de remplissage (95) et qui spécifient une position de contact du chariot de transport (70) au niveau de la station de remplissage (95).

2. Installation de mélange selon la revendication 1,
**caractérisée en ce**
**que** les capteurs sont des capteurs à infrarouges.

3. Installation de mélange selon les revendications 1 ou 2,
**caractérisée en ce**
**que** l'installation à osmose inversée (2) présente une unité de désinfection (4) pourvue d'une pompe (35), qui est reliée au circuit secondaire de la membrane à osmose inversée (22) et dont les produits de désinfection et de nettoyage peuvent être répartis également dans le circuit primaire.

4. Installation de mélange selon l'une quelconque des revendications 1 à 3,
**caractérisée en ce**
**qu'**un conduit d'alimentation en perméat (167) de l'unité de mélange (5) est relié au côté secondaire d'un filtre stérile à perméat (3) de l'installation à osmose inversée (2) et présente une soupape de libération de perméat (78).

5. Installation de mélange selon l'une quelconque des revendications 1 à 4,
**caractérisée en ce**
**que** la source de concentré présente un sachet de concentré (55), qui est relié à une balance de concentré (57).

6. Installation de mélange selon l'une quelconque des revendications 1 à 5,
**caractérisée en ce**
**que** le sachet de concentré (55) peut être relié, par l'intermédiaire d'un connecteur de sachet de concentré (53), à un connecteur de raccordement de concentré (49) situé côté appareil.

7. Installation de mélange selon l'une quelconque des revendications 1 à 6,
**caractérisée en ce**
**que** le sachet de solution de rinçage (69) peut être relié, par l'intermédiaire d'un connecteur de raccordement de solution de rinçage (67), au connecteur de raccordement de solution de rinçage (63) situé côté appareil.

8. Installation de mélange selon l'une quelconque des revendications 1 à 7,
**caractérisée en ce**
**que** les connecteurs de raccordement (49, 63) situés côté appareil présentent des volets de raccordement, qui sont montés dans des circuits de désinfection.

9. Installation de mélange selon l'une quelconque des revendications 1 à 8,
**caractérisée en ce**
**que** le contenant sous pression (97) est disposé sur le chariot de transport (70), qui contient une balance de contenant de solution de rinçage (71) et un capteur de température (72).

10. Installation de mélange selon l'une quelconque des revendications 1 à 9,
**caractérisée en ce**
**que** le sachet de solution de rinçage (69) est pourvu d'un conduit de transfert (89) et d'un connecteur de transfert (90) aux fins de la liaison avec un système de passerelle (91), qui contient un raccordement pour un appareil chirurgical.

11. Installation de mélange selon l'une quelconque des revendications 1 à 10,
**caractérisée en ce**
**que** le sachet de solution de rinçage (69) peut être relié, par l'intermédiaire d'un conduit de remplissage (68), à un connecteur de raccordement d'un bloc de flux sortant (185).
